# EUROPEAN PATENT APPLICATION

(11) **EP 3 067 795 A1**
(43) Date of publication of application: **14.09.2016**
(21) Application number: 15305357.4
(22) Date of filing: 10.03.2015
(51) Int. Cl.: G06F 9/45, G06F 9/445

(54) **A METHOD FOR GENERATING AN EMBEDDED SYSTEM DERIVABLE INTO A PLURALITY OF PERSONALIZED EMBEDDED SYSTEM**

(71) Applicant: GEMALTO SA, 92190 Meudon (FR)
(72) Inventor: Krizenecky, Milan, 92190 Meudon (FR); Regnault, Nicolas, 92190 Meudon (FR); Chapellier, Sébastien, 92190 Meudon (FR); Bertonnier, Damien, 92190 Meudon (FR); Martin, Valérie, 92190 Meudon (FR); Rantala, Janne, 92190 Meudon (FR); Tan Kent, Derrick, 92190 Meudon (FR)
(74) Representative: Delaval, Guillaume Laurent

(57) **Abstract**

This invention concerns a method for producing an embedded system designated as a principal customer item (308), the method comprising the following steps: generating at least one object file (302) by compiling (301) a source code (300) comprising a set of at least two features organized hierarchically such that a given feature associated with a given hierarchical level has only dependencies toward other features of lower hierarchical levels; determining a list (305) of a plurality of contiguous ranges of virtual addresses; mapping (306) the ranges of virtual addresses of the list (305) to a set of ranges of physical addresses in a permanent storage area of the embedded system; generating (307) from the results provided by the linking (303) and the mapping (306) steps a file executable by the embedded system; loading (320) said executable file in the permanent storage area of the embedded system.

## Description

### TECHNICAL FIELD

The present invention relates to a method for generating an embedded system derivable into a plurality of personalized embedded system and belongs to the technical field of certified embedded systems.

### BACKGROUND OF THE INVENTION

Embedded systems can be used for a wide variety of products and can implement various kinds of technology features. As an example, an embedded system can implement security features such as biometry, RSA (Rivest, Shamir, Adleman algorithm) and elliptic curves.

These features are generally stored in non volatile memory (NVM). In some product designs, features are stored in read-only (ROM) memory. In that case, one objective is to fill up the ROM memory with as many features as possible. Then, different versions of the product can be generated with different subsets of activated features. These different versions are usually designated as customer items.

The features of a product may also be stored in flash memory which is another kind of non volatile memory. As flash memory is expensive, one challenge during the design phase of a given customer item is to embed only the features required by a customer, for example RSA, but not Elliptic curves.

For some embedded systems with specific security requirement, it is sometimes mandatory to certify the product, for example using the Common Criteria for Information Technology Security Evaluation standard, ISO 15408. The certification process can be considered as a constraint during the production phase. For example, a certified product that includes five different features may be used as a basis to derive several sub-products adapted to different customer requirements by removing one or several features. As already underlined, these different products and sub-products are designated as customer items in this description.

When a given customer item is certified, the certification process should also be performed on the other customer items derived from this one. This is mainly because the different features of the parent customer item are generally interdependent. Therefore, there is a need of producing various customer items of an embedded system while minimizing the time and effort required by testing and certifying the embedded computer programs.

### SUMMARY OF THE INVENTION

This invention relates to a method for producing an embedded system designated as a principal customer item, the method comprising the following steps:
- generating at least one object file by compiling a source code comprising a set of at least two features organized hierarchically such that a given feature associated with a given hierarchical level has only dependencies toward other features of lower hierarchical levels;
- determining by linking the at least one object file a list of a plurality of contiguous ranges of virtual addresses, each range of virtual addresses in the list referencing the machine code of a feature belonging to the at least one set of features, the contiguous ranges being ordered following the hierarchical organization of the features;
- mapping the ranges of virtual addresses of the list to a set of ranges of physical addresses in a permanent storage area of the embedded system;
- generating from the results provided by the linking and the mapping steps a file executable by the embedded system called principal executable file;
- loading said principal executable file in the permanent storage area of the embedded system.

The invention also concerns an embedded system produced by applying the method for producing an embedded system designated as a principal customer item described above.

The embedded system comprises for example a flash memory used as a permanent storage area memorising the executable computer program.

The embedded system implements for example at least two set of features, the system further comprising a memory management unit for each set of feature.

The invention also concerns a method to generate an embedded system called derived customer item by removing from a set of features implemented in a principal customer item at least one feature, the embedded system comprising a physical memory associated to a memory mapping that assigns a set of logical addresses to a set of physical addresses of the physical memory. This method to generate a derived customer item comprises the steps of:
- selecting to be removed at least one feature of the at least one set of features, the selected feature having no feature of higher hierarchical level to be kept in the derived customer item;
- providing a modified execution file by deleting a portion of the principal executable file corresponding to the at least one selected feature;
- updating the memory mapping accordingly;
- loading said executable file in the permanent storage area of the embedded system.

As an example, the memory mapping can be updated in order to map the ranges of virtual addresses of the remaining features to the physical memory of the derived customer item, when an MMU is implemented in the embedded system.

According to one embodiment, at least one set of features comprises a feature called core feature associated with its lowest hierarchical level and which is not removable.

The invention also concerns an embedded system (derived customer item) produced by applying the method to generate an embedded system called derived customer item by removing from a set of features implemented in a principal customer item as described above.

As an example, this embedded system (derived customer item) comprises a flash memory used as a permanent storage area memorising the executable computer program.

In one embodiment, all or part of the permanent storage area freed by the feature removal is reserved as user data.

In one embodiment, the embedded system implements at least two set of features, the system further comprising a memory management unit for each set of features.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- figure 1 is an exemplary architecture of the hardware of an embedded system that may be used in conjunction with the invention;
- figure 2 is example of a modular architecture for a computer program product allowing an easy derivation of customer items;
- figure 3 illustrates schematically a way to generate a principal customer item and one or several derived customer items;
- figure 4 provides an example of a list of ranges of virtual addresses for a given modular architecture;
- figures 5A-5C illustrate the process of removing features in order to generate a derived customer items;
- figure 6 is an example of mapping from the virtual memory space to the physical memory of an embedded system using a plurality of memory code sectors with a memory management unit.

### DETAILED DESCRIPTION

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments. It is intended that changes and modifications can be made to the described embodiments without departing from the true scope and spirit of the subject invention as defined by the appended claims.

In the following description, numerous specific details are set forth. However, it is understood that embodiments may be practiced without these specific details. In other instances, well known circuits, structures and techniques have not been show in detail in order not to obscure the understanding of the description.

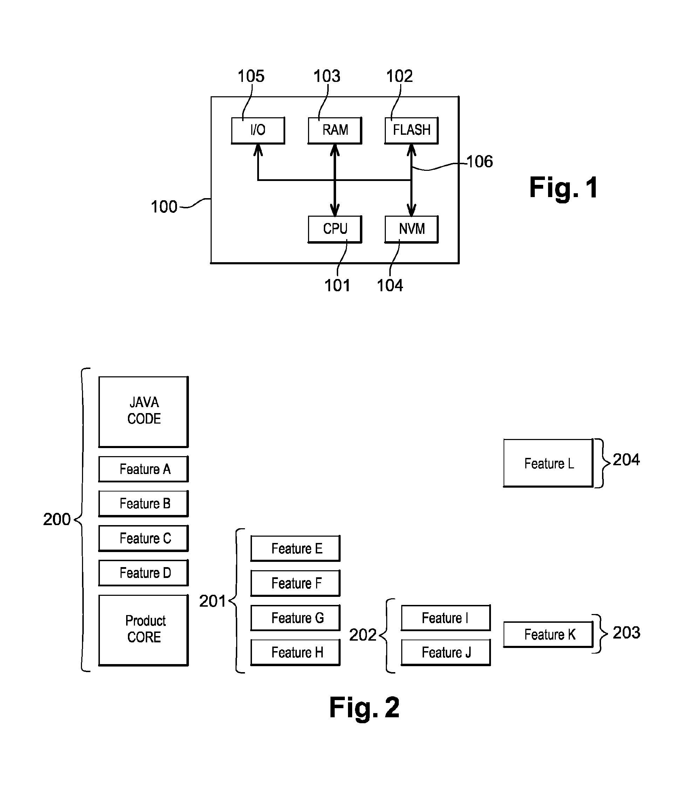

**Figure 1** is an exemplary architecture of the hardware of an embedded system 100 that may be used in conjunction with the invention. The embedded system 100, according to the example of figure 1, has a central processing unit 101, a flash memory (FLASH) 102, a random access memory (RAM) 103, a non-volatile memory (NVM) 104 other than flash, and a communication interface 105 for receiving input and placing output to a computer network, e.g., the Internet, to which the embedded system 100 is connected, either directly or via intermediary devices, such as a host computer. These various components are connected to one another, for example, by bus 106.

In one embodiment of the invention, a set of at least one feature, as well as other software modules, are stored on the embedded system 100 in the flash memory 102. In alternative embodiments, the software modules stored in flash memory 102 would be stored in a ROM memory or other types of non-volatile memory 104. For purposes of illustration, the invention is described using the flash memory example. However, that should not be construed as a limitation of the scope of the invention and wherever flash memory is used, ROM memory or other types of non-volatile memory can be substituted as an alternative.

The flash memory 102 may also contain some type of operating system, for example a Java Virtual Machine. During operation, the CPU 101 operates according to instructions in the various software modules stored in flash memory 102 or NVM 104.

In order to avoid re-testing and re-certifying of derived customer items, a technique is proposed hereafter in order to avoid re-compilation and re-linking for customer items at product generation time or on the field for personalizing products. According to the invention, if the customer item embedding this principal computer program product is tested and certified, all customer items derived from this product will be considered as already tested and certified.

**Figure 2** is an example of a modular architecture for a computer program product allowing an easy derivation of customer items.

The computer program product is based on a modular architecture comprising one or several independent sets of features. In the example of figure 2, a principal computer program product comprises five towers 200, 201, 202, 203, 204. Each tower comprises at least one feature, a feature being defined in this description as a combination of at least one compilation unit implementing a consistent set of services.

A first set 200 comprises a core feature called product core, four features A, B, C, D as well as some Java bytecode.

In this description, a distinction is made between core features which are mandatory for the product implementation, and non-core features which are optional components that may be removed for a given customer item. Unless explicitly mentioned, a feature refers to a non-core feature.

A second set 201 comprises four features E, F, G, H implementing RSA algorithms.

A third set 202 comprises two features I, J implementing several error correcting codes (ECC) algorithms.

A fourth set 203 comprises a single feature K implementing a source coding algorithm and a fifth tower comprising a single feature L implementing RSA on-board key generation (OBKG) algorithm.

According to the invention, a set of features comprises one or several features. For a set of features comprising more than one feature, these are organized hierarchically such that a given feature associated with a given hierarchical level has only dependencies toward other features of lower hierarchical levels in the same set. In this description, the word "dependency" should be understood as a functional link between two features belonging to the same set of features. These functional links are introduced by instructions in the source code, for example "call" or "jump" instructions. In other words, features of higher hierarchical level in a set of features may have dependencies on features of lower hierarchical level only. Features of lower hierarchical levels do not have dependencies towards features of higher hierarchical levels.

In a preferred embodiment, when the customer items are based on a modular architecture with more than one set of features, the different sets are designed to be independent, that is to say that the features of a given set have no dependencies on features belonging to other sets. Alternatively, dependencies between features belonging to different sets of features may be allowed, but these should be carefully controlled and explicitly managed by the operating system of the embedded system. In order to ensure the control of dependencies, static code analysis tools may be used.

In a particular embodiment of the invention, a product may comprise a set of features including one or several core features. These core features are implementing the minimum functionalities to be embedded in a customer item. This or these features are designated as the product core and are associated to the lowest hierarchical level of the main tower 200. Therefore, the product core has no dependencies on any non-core features.

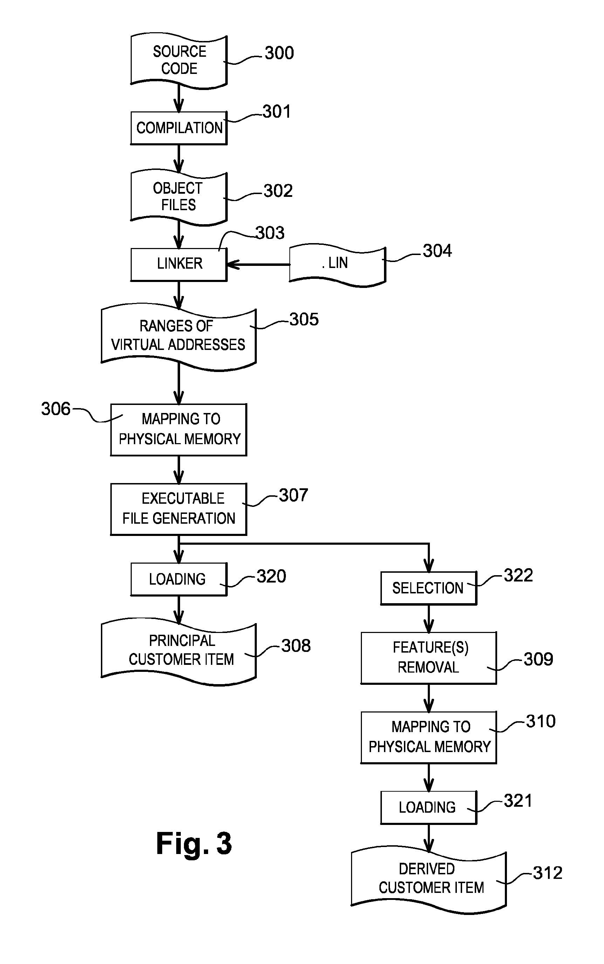

**Figure 3** illustrates schematically a way to generate a principal customer item and one or several derived customer items.

The aim of this process is mainly to generate a set of ranges of virtual addresses which will serve as a basis for generating different versions of an embedded system product, these versions being referenced as customer items. One essential aspect of the invention is that the compilation and the linking of the code to be embedded in the product is performed only one time for all the customer items, the principal one and the derived ones. As a result, the executable binary code is the same for all customer items. The process of generating the different customer items is described hereafter.

The source code 300 is provided such that its structure respects the hierarchical organisation of the modular architecture. In other words, the source code corresponding to a given feature does not comprise any dependencies towards other features of higher hierarchical level.

At least one object file 302 is then generated by compiling 301 the source code 300.

The next step applies a link editor 303 to the at least one object file 302 in order to generate a file comprising a list 305 of contiguous ranges of virtual addresses as well as an intermediate version of the machine code to be executed by the embedded system (not represented). The link editor 303 uses as an input a link file 304 representative of the modular architecture, meaning that it takes into account the hierarchical structure of the sets of features.

In the generated list 305, each range of virtual addresses is referencing the machine code of a feature belonging to a given set of features. Further, the contiguous ranges are ordered following the hierarchical organization of the features.

In one embodiment, the customer's items are secure elements. They are called "secure" because they are able to control the access to the data they contain and to authorize or not the use of data by other machines. The secure elements may also provide computation services based on cryptographic components. In general, secure elements have limited computing resources and are intended to be connected to a host machine. Secure elements may be removable or fixed to a host device. Smart cards are portable secure elements.

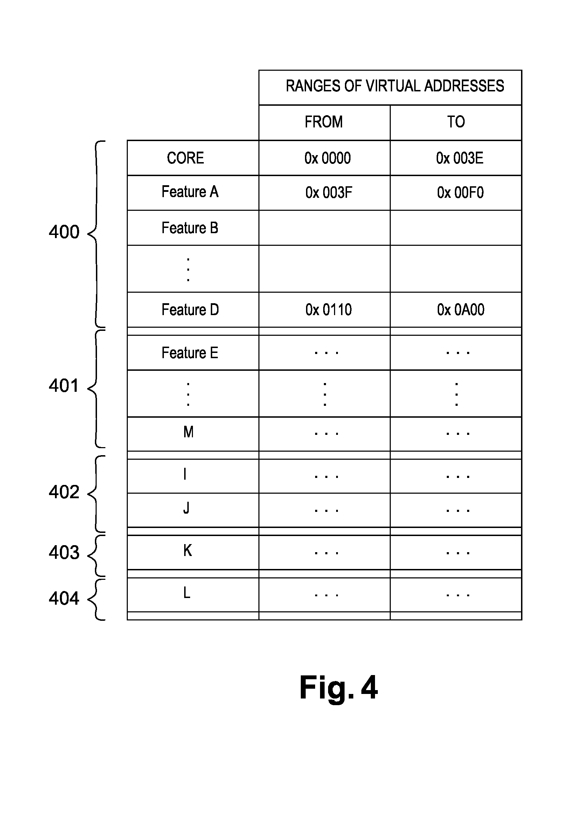

**Figure 4** provides an example of a list of ranges of virtual addresses for a given modular architecture. In this example, the modular architecture comprises five sets of features 400-404 corresponding to the one introduced in figure 2.

Once the file comprising all the ranges 305 of virtual addresses is available, it is possible to generate a principal customer item. A customer item is called principal when it comprises all the features of the modular architecture. For that purpose, the virtual addresses from the identified ranges are mapped 306 to the physical memory (flash memory for example) of the targeted embedded system. The target embedded system is the system on which it is intended to execute the code generated by the proposed method.

Then, an executable file is generated 307 based on this physical mapping, for example using Intel (trademark) HEX format. This executable file is called principal executable file.

In order to generate the principal customer item, the computer program is embedded by burning the principal executable file into the flash memory of the targeted embedded system.

The principal executable file generated 307 for the principal customer item can also be used as a basis to generate derived customer items.

For that purpose, one or several features are selected 322 for being removed from the modular architecture. One of several portions of the principal execution file corresponding to the feature(s) to be removed are deleted 309. A portion of the principal executable file corresponds to one or several lines of this file.

If the principal executable file is an HEX file, it consists of text lines, a line being designated as a record. Each record comprises a sequence of binary numbers and follows a predefined format. These binary numbers may represent data, physical memory addresses, or other values, depending on their position in the line.

A record comprises six parts:
- a start code part;
- a byte count part indicating the number of bytes in the data field;
- an address part representing a memory address offset of the data allowing to retrieve the physical address for storing said data;
- a record type part defining the meaning of the data field;
- a checksum part.

Once the portion of the principal executable file corresponding to the feature(s) to be removed has been deleted, the memory mapping is updated 310. An embedded system is generally based on a microcontroller or microprocessor associated to a single memory management unit which is associated to a memory mapping. However, the invention is also applicable to embedded systems comprising a plurality of MMU or no MMU.

The memory mapping is updated 310 in order to map the ranges of virtual addresses of the remaining features to the physical memory of the embedded system. For example, the MMU can be configured so that the remaining features are memorized in a contiguous address space in the physical memory. Further, the memory mapping can be updated to locate the unused physical memory space in a contiguous physical address space.

The MMU memory mapping can be directly written in the executable file and stored for example as a table in Non-Volatile Memory. Alternatively, it can be updated during code execution by invoking some MMU services.

It is also possible to update the address field of the remaining lines in the modified executable file for it to be brought into line with the memory mapping as defined at step 310.

In case of an HEX file record, the physical address is encoded in the address part which can be an offset. It is hence important that the MMU mapping is conform to the HEX file content.

The way to update the physical address field for the remaining lines of the executable file can be founder specific. On most of devices, the granularity to remove sections of physical memory is one non-volatile memory (NVM) page which is typically equal to 256 or 512 bytes. According to the invention, the virtual address space remains unaffected while generating derived customer items from a principal customer item.

As already underlined, a feature can be removed only if there is no other feature of higher hierarchical level in the same set of features. Once the removal 309 of features is performed, the modified executable file, for example an Intel (trademark) HEX file, is loaded in the flash memory of the targeted embedded system, and a derived customer item 312 is produced. One of the main advantages of the invention is that a plurality of customer items comprising different combinations of features can be produced without re-compiling or re-linking the source code. This implies that when the principal customer item is certified, the derived customer item can also be considered as certified.

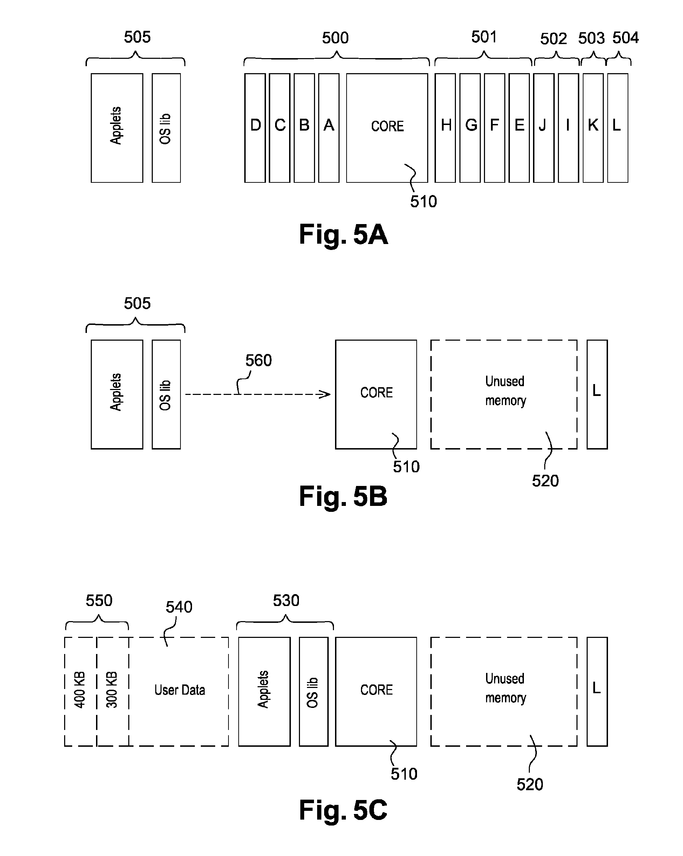

**Figures 5A-C** illustrate the process of removing features in order to generate a derived customer items.

**Figure 5A** provides an example of ranges of virtual addresses 305 as provided after linking 303 the object files 302 of a given modular architecture.

In this example, the modular architecture comprises five set of features 500-504. The first set of features 500 comprises a core feature 510 and four other features A, B, C and D. The core feature 510 is associated to the lower hierarchical level of this set of feature and feature D is associated to the highest hierarchical level. The second set of features 501 comprises four features E, F, G and H. The third set of features 502 comprises two features I and J. The fourth 503 and fifth 504 sets of features both comprise a single feature, named respectively K and L. According to one essential aspect of the invention, a feature can be removed only if there is no other remaining feature of higher hierarchical level in the same set of features.

**Figure 5B** shows an updated list of ranges of virtual addresses after a removal of features in order to generate a given customer item.

In this example, the virtual addresses of the second 501, third 502 and fourth 503 sets of features have been entirely removed. The core feature 510 of the first set of feature 500 which is mandatory is kept as well as the fifth set of features 504.

An important aspect of the invention is that the virtual address space remains unaffected for the features of the product and the executable code is not fragmented.

However, the modular architecture may also comprise Java bytecode 505 corresponding for example to several applets and some operating system libraries. In that case, its associated range of virtual addresses can be shifted 560 as it does not impact the code execution.

**Figure 5C** provides an example of physical addresses after the removal of several features of the modular architecture and underlines the memory space which is made available. In this example, the user data remains fragmented but may be merged by recompacting the layout.

In this example, a part of the available space is allocated for memorising user data, that is to say data which is specific to the user of the customer item. Advantageously, the space brings an added value to the derived customer item and this can be monetized. For a predetermined size of physical memory, removing unnecessary features allows to maximize the size of the user data memory 540 by adding unused memory 520 to it and therefore increase the revenue generated while selling the customer item.

Additionally, physical memory manufacturer are sometimes selling their product using pay-per-use billing (also referred as bill-per-use, BPU). This means that the selling price of the memory will depend on the amount of the physical memory that is really used by the product. Therefore, by removing unnecessary features from a modular architecture, the unused memory space 520 is optimized and the production cost of the embedded product is reduced.

Advantageously, the invention allows producing different versions of an embedded system, based on the same hardware platform, but taking into account the needs of different customers or applications of the product. The production process is fast, as there is not re-compilation of re-linking required for the derived customer item. Further, it is not anymore required to recertify the derived customer items if the principal customer item is already certified.

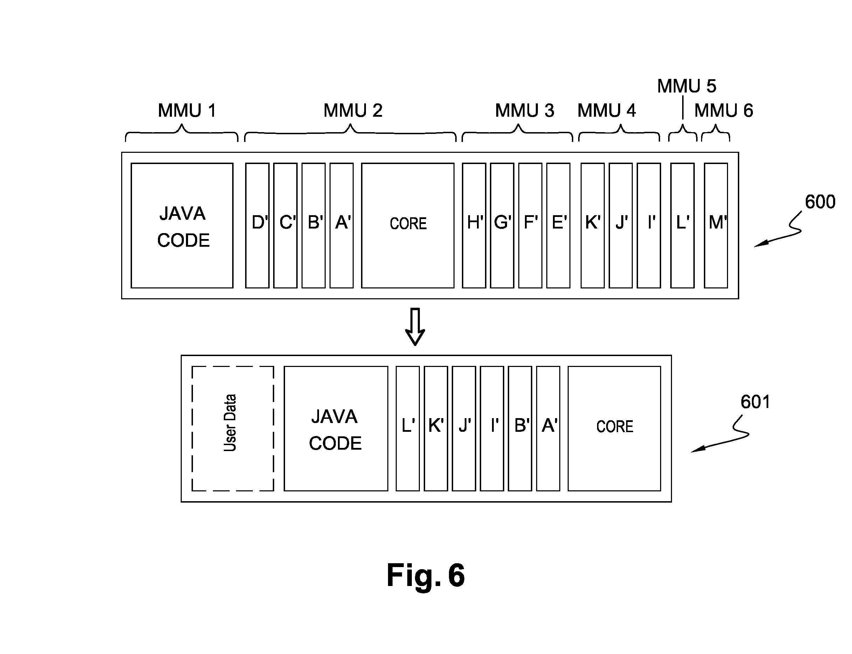

**Figure 6** is an example of mapping from the virtual memory space to the physical memory of an embedded system using a plurality of memory code sectors with a memory management unit.

In this example, the modular architecture comprises five sets of features as well as java bytecode to which are allocated several ranges of virtual addresses 600.

In this embodiment, the embedded system comprises a memory management unit (MMU) descriptor for each set of feature.

A first memory management unit descriptor MMU1 is dedicated to the Java bytecode.

A second memory management unit descriptor MMU2 is dedicated to a set of features comprising a core feature and four other features A', B', C' and D'.

A third memory management unit descriptor MMU3 is dedicated to a set of features comprising four features E', F', G' and H'.

A fourth memory management unit descriptor MMU4 is dedicated to a set of features comprising two three features I', J' and K'.

A fifth memory management unit descriptor MMU5 is dedicated to a set comprising a single feature L'.

A sixth memory management unit descriptor MMU6 is dedicated to a set comprising a single feature M'.

During the design phase of a derived customer item, the ranges of virtual addresses of features C', D', features E', F', G', H' and feature M' are removed and the mapping of the remaining features and code to the physical memory 601 of the product is done thanks to MMU descriptors 1-6.

Advantageously, the use of a dedicated MMU descriptor for each set of feature enforces the non-dependency between towers. Tools for controlling the dependencies between different sets of features can also be used during the design phase.

## Claims

1. A method for producing an embedded system designated as a principal customer item (308), the method comprising the following steps:
- generating at least one object file (302) by compiling (301) a source code (300) comprising a set of at least two features organized hierarchically such that a given feature associated with a given hierarchical level has only dependencies toward other features of lower hierarchical levels;
- determining by linking (303) the at least one object file (302) a list (305) of a plurality of contiguous ranges of virtual addresses, each range of virtual addresses in the list referencing the machine code of a feature belonging to the at least one set of features, the contiguous ranges being ordered following the hierarchical organization of the features;
- mapping (306) the ranges of virtual addresses of the list (305) to a set of ranges of physical addresses in a permanent storage area of the embedded system;
- generating (307) from the results provided by the linking (303) and the mapping (306) steps a file executable by the embedded system called principal executable file;
- loading (320) said principal executable file in the permanent storage area of the embedded system.

2. An embedded system (308) produced by applying the method according to claim 1.

3. An embedded system (308) according to claim 2 comprising a flash memory used as a permanent storage area memorising the executable computer program.

4. An embedded system (308) according to any of claims 2 or 3 and implementing at least two set of features, the system further comprising a memory management unit for each set of feature.

5. A method to generate an embedded system (312) called derived customer item by removing from a set of features implemented in a principal customer item (308) according to any of claims 2 to 4 at least one feature, the embedded system comprising a physical memory associated to a memory mapping that assigns a set of logical addresses to a set of physical addresses of the physical memory, the method comprising the steps of:
- selecting (322) to be removed at least one feature of the at least one set of features, the selected feature having no feature of higher hierarchical level to be kept in the derived customer item;
- providing (309) a modified execution file by deleting a portion of the principal executable file corresponding to the at least one selected feature;
- updating (310) the memory mapping accordingly;
- loading (321) said executable file in the permanent storage area of the embedded system (312).

6. A method according to claim 5, wherein the memory mapping is updated in order to map the ranges of virtual addresses of the remaining features to the physical memory of the derived customer item, when an MMU is implemented in the embedded system.

7. A method according to any of claims 5-6, wherein the at least one set of features comprises a feature called core feature associated with its lowest hierarchical level and which is not removable

8. An embedded system (312) produced by applying the method according to any of claims 5 to 7.

9. An embedded system (312) according to claim 8 comprising a flash memory used as a permanent storage area memorising the executable computer program.

10. An embedded system (312) according to any of claims 8 or 9, wherein all or part of the permanent storage area freed by the feature removal is reserved as user data.

11. An embedded system (312) according to any of claims 8 to 10 and implementing at least two set of features, the system further comprising a memory management unit for each set of features.
